# EUROPEAN PATENT SPECIFICATION

(11) **EP 3 575 677 B1**
(45) Date of publication and mention of the grant of the patent: **30.11.2022**
(21) Application number: 19177545.1
(22) Date of filing: 30.05.2019
(51) Int. Cl.: F21S 43/14, F21S 43/145, B60Q 1/00, B60Q 1/26, B60Q 1/50, F21S 43/20, F21S 43/50, G09F 13/04, G09F 21/04, G09F 13/06

(54) **SIGNALLING SYSTEM FOR THE EXTERIOR OF A VEHICLE**
SIGNALANLAGE FÜR AUSSENSEITE DES FAHRZEUGS
SYSTÈME DE SIGNALISATION POUR L'EXTÉRIEUR DU VÉHICULE

(30) Priority: 30.05.2018 IT 201800005869
(43) Date of publication of application: 04.12.2019
(73) Proprietor: IVECO FRANCE S.A.S., 69200 Vénissieux (FR)
(72) Inventor: CODRON, Stephane, 69008 LYON (FR)
(74) Representative: Faraldi, Marco

(56) References cited:
- JP-A- 2000 255 317
- JP-A- 2012 088 624
- JP-A- 2017 220 309
- US-A- 5 604 480
- US-A1- 2007 103 922
- US-A1- 2009 262 545
- US-A1- 2013 027 960

## Description

### TECHNICAL FIELD

The present invention concerns a signalling system for a vehicle, in particular a signalling system for the exterior of a public passenger transport vehicle.

### STATE OF THE PRIOR ART

Some public passenger transport vehicles, for example buses for transporting children to school, comprise pictograms which alert other road vehicles to their presence and to potential danger; a school bus must stop frequently, and this stop must be signalled to other vehicles since children may emerge from the front of the vehicle.

These pictograms were formerly reflective stickers glued to a wall, for example the rear wall, of the vehicle. However, when there is fog or rain this sticker may not be visible.

This problem has been resolved by a regulatory evolution recommending the use of LEDs or OLEDs which can however dazzle drivers of other vehicles and furthermore do not succeed in clearly showing the shape of the pictogram in all possible atmospheric conditions.

In order to reduce the risk of accidents, it is therefore necessary to improve vehicle signalling systems by making the silhouette of a desired pictogram visible in all possible visibility situations, without however dazzling the drivers of other vehicles.

Examples of known signalling devices for the exterior of a vehicle are disclosed in patent documents US20130027960 A1 or JP2000255317. However, such systems are not visible in all possible visibility condition and, moreover, are particularly bulky and heavy.

The invention aims to resolve the above-mentioned problems in an optimised and cost-effective way.

### SUMMARY OF THE INVENTION

The above-mentioned objects are achieved by a signalling system according to the attached Claims.

### BRIEF DESCRIPTION OF THE DRAWINGS

Other characteristics and benefits of the invention will become apparent from the following non-limiting description, provided for illustrative purposes, with reference to the attached drawings wherein:
- Figure 1 shows a vehicle comprising a signalling system according to the invention;
- Figure 2 is a perspective view of the signalling system according to the invention; and
- Figure 3 is an exploded perspective view of the system of Figure 2.

### DETAILED DESCRIPTION OF THE INVENTION

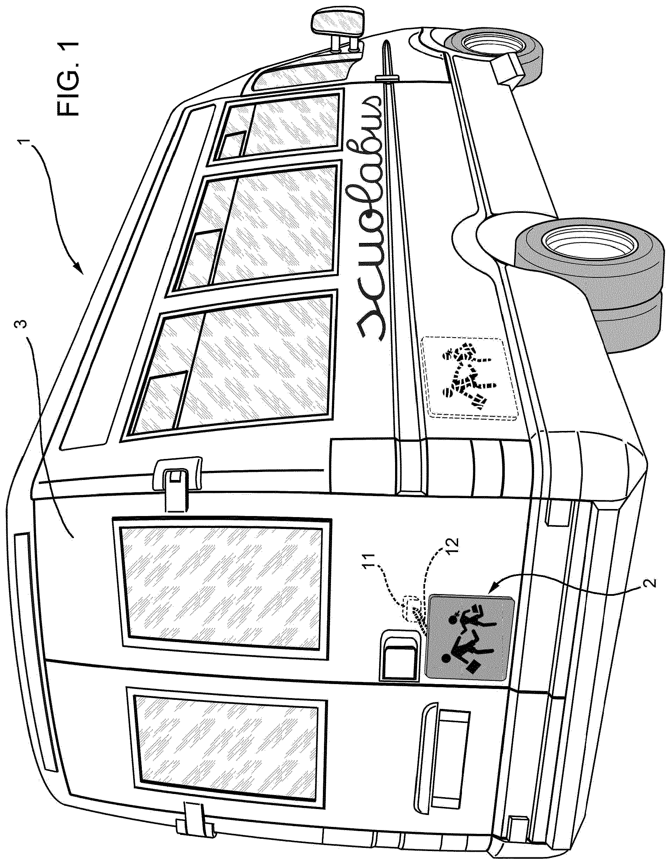

Figure 1 shows a vehicle 1, in the case described above a school bus, with a signalling system 2 which can be attached to a wall 3 of the vehicle. In the case described above, the signalling system 2 is attached to a rear wall 3 of the vehicle. The signalling system 2 may be attached to the wall 3 by attachment means, for example threaded or glued means, or attached by means of a shaped mechanical coupling, not shown.

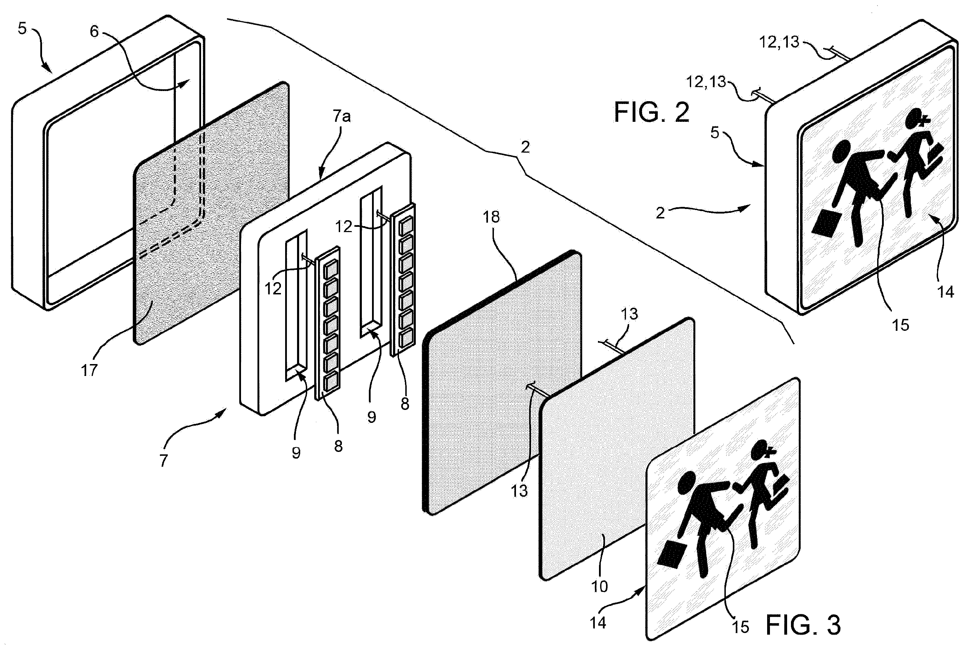

As better illustrated in Figures 2 and 3, the signalling system 2 comprises a frame 5 defining a closed shape, in the example above a square shape, and defining an inner volume 6 in which the following elements are housed.

The signalling system 2 comprises a support element 7, preferably an element made of transparent material; for example, the support element 7 is made of plexiglass.

Beneficially, the support element 7 comprises at least one LED 8, preferably two LED strips 8 housed in seats 9 cut out in the support element 7. Even more preferably, the two LED strips 8 are placed parallel to each other and extend along the height of the frame 5.

At least one LED 8 is electrically connected to a control unit 11 by electrical connection elements 12, for example a wired connection. The control unit 11 is configured to control the lighting of the LED 8, preferably flashing it by powering it on at a predefined frequency. The control unit 11 may be the ECU of the vehicle 1.

According to the invention, the signalling system 2 further comprises a film 10 made of electroluminescent material placed opposite the at least one LED 8. An electroluminescent material is a material which emits light without glare when an electric current or an electric field passes through it.

The electroluminescent film 10 is electrically connected to the control unit 11 by electrical connection elements 13, for example a wired connection. The control unit 11 is configured to control the lighting of the electroluminescent film 10, preferably flashing it by powering it on, preferably at 12-24V, at a predefined frequency. Even more preferably, this frequency is the same lighting frequency as that of the at least one LED 8.

The signalling system 2 also comprises a sticker 14, which is attached to a surface of the electroluminescent film 10 opposite to that in front of the LED 8 and defining a silhouette 15 of a predefined shape. The sticker 14 is made of opaque material and the silhouette 15 is obtained via a corresponding shape cut in said opaque sticker 14.

The signalling system 2 may further comprise an opaque layer 17, preferably a black film, configured to prevent light transmission from the strips 8 to the rear of the signalling system 2. The opaque layer 17 is preferably attached to a rear surface 7a of the support element 7 opposite to the surface in which the seats 9 are made.

The signalling system 2 may also comprise a diffuser 18, preferably made of plexiglass or polarised glass to concentrate the light and interposed between the support element 7, opposite the at least one LED 8, and the electroluminescent film 10. The diffuser 18 is configured to diffuse and concentrate light from the LED 8 towards the electroluminescent film 10.

All the elements (diffuser 18, opaque layer 17, electroluminescent film 10, support element 7) described above are housed inside the volume 6 and have a shape complementary to that of the frame 5. It is further clear that they can be attached in a known way to the latter and to each other in a detachable way (to allow their replacement in case of malfunction).

The thickness of the frame 5, containing all the above-mentioned elements, is less than 2 mm, preferably between 1 and 2 mm.

Operation of the signalling system 2 according to the invention is as follows.

The signalling system 2 can be activated automatically, for example on the basis of a bus manoeuvre or on the basis of the activation of the bus turn signals, or manually according to the driver's wishes.

When activated, the signalling system 2 makes it possible to signal to other drivers the silhouette 15 of the sticker 14 thanks to the light which passes through the shape cut in the sticker.

If necessary, the sticker can be changed by substituting it with another sticker 14 with a different silhouette 15.

From the above, the benefits of a signalling system 2 according to the present invention are very clear.

Thanks to the signalling system 2, the silhouette of the sticker 14 is visible in all weather conditions and, furthermore, there is no longer the risk of dazzling drivers of other vehicles in the vicinity of the bus 1.

The risk of glare is also reduced thanks to use of the diffuser 18.

The signalling system 2 can be attached anywhere on the exterior of one of the walls of the vehicle 1 since the light from the LED 8 and the film 10 is absorbed by the opaque layer 17. For example, the signalling system 2 could also be attached to a side window of the vehicle 1.

The frame 5 is also not thick; the frame 5 thus cannot interfere with the gauge of the vehicle 1.

Furthermore, the frame 5 can be attached to and detached from one vehicle 1 and to/from another and, similarly, different stickers 14 could be applied in substitution for each other on the same signalling system 2.

The signalling system 2 according to the present invention can also be assembled quickly and economically.

Finally, it is clear that the signalling system 2 according to the present invention may be subject to modifications and variations without thereby departing from the protective scope defined by the Claims.

For example, the shape of the frame 5, the LED 8 and the sticker 14 could vary. Furthermore, the materials of the support element 7 or the diffuser 18 could be different.

## Claims

1. A signalling system (2) for the exterior of a vehicle (1), said system comprising:
• a support element (7) configured to house at least one LED (8) connectable to a control unit (11) configured to power said LED (8);
• a frame (5) configured to house said support element (7),said signalling system (2) being **characterized by** comprising:
• an electroluminescent film (10) connectable to said control unit (11) configured to power said electroluminescent film (10) and housed in said frame (5),
• an opaque sticker (14) that shows a silhouette (15);
said electroluminescent film (10) being arranged in front of said at least one LED (8) of said support element (7) and said opaque sticker (14) being attached onto the surface of said electroluminescent film (10) opposite to the one placed in front of said at least one LED (8) of said support element (7),
said frame (5) being configured to be fixed externally to a wall (3) of said vehicle (1).

2. The signalling system according to Claim 1, further comprising a diffuser element (18) interposed between the support element (7) and the electroluminescent film (10).

3. The signalling system according to Claim 2, wherein said diffuser element (18) is made of plexiglass or polarised glass.

4. The signalling system according to any one of Claims 1 to 3, further comprising an opaque layer (17) coupled to a surface of said support element (7) opposite to the one placed in front of said electroluminescent film (10).

5. The signalling system according to Claim 4, wherein said opaque layer (17) is a black film.

6. The signalling system according to any one of the Claims 1 to 5, wherein said support element (7) is made of plexiglass.

7. The signalling system according to any one of the Claims 1 to 6, wherein said silhouette (15) shown on said sticker (14) is obtained by cutting out a shape on an opaque sticker (14).

8. The signalling system according to any one of the Claims 1 to 7, further comprising two LED strips (8) parallel to one another.

9. The signalling system according to any one of the Claims 1 to 8, wherein said frame (5) has a thickness ranging between 1 mm and 2 mm.

10. A vehicle comprising a signalling system according to one of the preceding Claims.

## Patentansprüche

1. Signalsystem (2) für das Äußere eines Fahrzeugs (1), welches System umfasst:
ein Trägerelement (7), dazu eingerichtet, zumindest eine LED (8) aufzunehmen, die mit einer Steuereinheit (11) zur Stromversorgung der LED verbindbar ist;
einen Rahmen (5), dazu eingerichtet, das Trägerelement (7) aufzunehmen,
wobei das Signalsystem (2) **dadurch gekennzeichnet ist, dass** es umfasst:
eine Elektrolumineszenzfolie (10), verbindbar mit der Steuereinheit (11), die zur Stromversorgung der Elektrolumineszenzfolie (10) eingerichtet und im Rahmen (5) angeordnet ist,
ein opaker Aufkleber (14), der eine Silhouette (15) zeigt;
wobei die Elektrolumineszenzfolie (10) vor der zumindest einen LED (8) des Trägerelements (7) angeordnet ist, und wobei der opake Aufkleber (14) auf der Oberfläche der Elektrolumineszenzfolie (10) angeordnet ist, die der Oberfläche gegenüberliegt, die vor der zumindest einen LED (8) des Trägerelements (7) angeordnet ist,
wobei der Rahmen (5) zur äußeren Befestigung an einer Wand (3) des Fahrzeugs (1) eingerichtet ist.

2. Signalsystem nach Anspruch 1, weiter umfassend ein Streuelement (18), dass zwischen dem Trägerelement (7) und der Elektrolumineszenzfolie (10) angeordnet ist.

3. Signalsystem nach Anspruch 2, wobei das Streuelement (18) aus Plexiglas oder polarisiertem Glas besteht.

4. Signalsystem nach einem der Ansprüche 1 bis 3, weiter umfassend eine opake Schicht (17), die mit einer Oberfläche des Trägerelements (7) verbunden ist, die der Oberfläche gegenüberliegt, die vor der Elektrolumineszenzfolie (10) angeordnet ist.

5. Signalsystem nach Anspruch 4, wobei die opake Schicht (7) eine schwarze Folie ist.

6. Signalsystem nach einem der Ansprüche 1 bis 5, wobei das Trägerelement (7) aus Plexiglas besteht.

7. Signalsystem nach einem der Ansprüche 1 bis 6, wobei die auf dem Aufkleber (14) gezeigte Silhouette (15) durch Ausschneiden einer Form auf dem opaken Aufkleber (14) entsteht.

8. Signalsystem nach einem der Ansprüche 1 bis 7, weiter umfassend zwei parallel zueinander angeordnete LED-Streifen (8).

9. Signalsystem nach einem der Ansprüche 1 bis 8, wobei der Rahmen (5) eine Dicke zwischen 1 mm und 2 mm aufweist.

10. Fahrzeug, umfassend ein Signalsystem nach einem der vorherigen Ansprüche.

## Revendications

1. Système de signalisation (2) pour l'extérieur d'un véhicule (1), ledit système comprenant :
• un élément de support (7) configuré pour loger au moins une DEL (8) pouvant être reliée à une unité de commande (11) configurée pour alimenter ladite DEL (8) ;
• un cadre (5) configuré pour loger ledit élément de support (7), ledit système de signalisation (2) étant **caractérisé en ce qu'**il comprend :
• un film électroluminescent (10) pouvant être relié à ladite unité de commande (11) configurée pour alimenter ledit film électroluminescent (10) et logé dans ledit cadre (5),
• un autocollant opaque (14) qui représente une silhouette (15) ;
ledit film électroluminescent (10) étant agencé devant ladite au moins une DEL (8) dudit élément de support (7) et ledit autocollant opaque (14) étant apposé sur la surface dudit film électroluminescent (10) à l'opposé de celle placée devant ladite au moins une DEL (8) dudit élément de support (7),
ledit cadre (5) étant configuré pour être fixé à l'extérieur d'une paroi (3) dudit véhicule (1).

2. Système de signalisation selon la revendication 1, comprenant en outre un élément diffuseur (18) interposé entre l'élément de support (7) et le film électroluminescent (10).

3. Système de signalisation selon la revendication 2, dans lequel ledit élément diffuseur (18) est constitué de plexiglas ou de verre polarisé.

4. Système de signalisation selon l'une quelconque des revendications 1 à 3, comprenant en outre une couche opaque (17) couplée à une surface dudit élément de support (7) à l'opposé de celle placée devant ledit film électroluminescent (10).

5. Système de signalisation selon la revendication 4, dans lequel ladite couche opaque (17) est un film noir.

6. Système de signalisation selon l'une quelconque des revendications 1 à 5, dans lequel ledit élément de support (7) est constitué de plexiglas.

7. Système de signalisation selon l'une quelconque des revendications 1 à 6, dans lequel ladite silhouette (15) représentée sur ledit autocollant (14) est obtenue par le découpage d'une forme sur un autocollant opaque (14) .

8. Système de signalisation selon l'une quelconque des revendications 1 à 7, comprenant en outre deux bandes de DEL (8) parallèles l'une à l'autre.

9. Système de signalisation selon l'une quelconque des revendications 1 à 8, dans lequel ledit cadre (5) présente une épaisseur dans une plage de 1 mm à 2 mm.

10. Véhicule comprenant un système de signalisation selon l'une des revendications précédentes.
